# FASCICULE DE BREVET EUROPEEN

(11) **EP 2 262 652 B1**
(45) Date de publication et mention de la délivrance du brevet: **07.05.2014**
(21) Numéro de dépôt: 09722560.1
(22) Date de dépôt: 20.03.2009
(51) Int. Cl.: B60C 11/12

(54) **SCULPTURE POUR BANDE DE ROULEMENT DE PNEU**
REIFENPROFILDESIGN
TYRE TREAD DESIGN

(30) Priorité: 20.03.2008 FR 0851796
(43) Date de publication de la demande: 22.12.2010
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: HIDROT, Jean-Denis, 63400 Chamberlières (FR); QUANTINET, Benjamin, 63000 Clermont-Ferrand (FR)
(74) Mandataire: Diernaz, Christian
(86) Numéro de dépôt international: PCT/EP2009/053322
(87) Numéro de publication internationale: WO 2009/115606

(56) Documents cités:
- EP-A- 1 207 057
- JP-A- 4 095 510
- JP-A- 2001 063 318
- US-A- 5 127 455
- US-A- 5 679 186
- US-A1- 2003 029 535
- US-B1- 6 382 283

## Description

L'invention concerne la bande de roulement de pneu pour véhicule portant de lourdes charges comme des véhicules poids lourd, et plus particulièrement de disposition permettant d'améliorer l'uniformité de l'usure de cette bande.

De manière connue, une bande de roulement pour pneu d'un véhicule poids lourd comprend des rainures d'orientation générale circonférentielle ou longitudinale (par orientation générale on entend ici que ces rainures s'étendent dans la direction circonférentielle mais qu'elles peuvent être rectiligne ou zigzag). Il est d'usage de différencier les dessins de sculpture de la bande de roulement selon l'essieu sur lequel le pneu est monté. En usage sur essieu moteur, la bande de roulement de pneu pour poids lourd est pourvue en outre avec une pluralité de rainures d'orientation générale transversale (par orientation générale transversale, on entend ici que la direction moyenne de ces rainures peut être parallèle avec la direction de l'axe de rotation du pneu ou faire un angle différent de zéro avec ledit axe).

Les rainures d'orientation circonférentielle et transversale d'une telle bande délimitent au moins dans la partie médiane de la bande de roulement au moins une rangée dite "rangée intermédiaire" formée d'une succession d'éléments de relief sous la forme de blocs de matériau caoutchouc, ces blocs ayant des hauteurs moyennes égales à la profondeur des rainures les délimitant.

Chaque bloc comprend une face de contact destinée à venir en contact avec la chaussée en cours de roulage et des faces latérales coupant ladite face de contact pour former des arêtes. L'arête rentrant la première en contact avec la chaussée en roulage correspond à l'arête dite "arête d'attaque" et est formée par l'intersection de la face de contact avec une face latérale dite "face d'attaque" du bloc, l'arête sortant en dernier du contact étant dite "arête de fuite" formée par l'intersection de la face de contact et d'une face latérale dite "face de fuite".

Il est par ailleurs connu que dans certaines conditions de roulage, les arêtes de fuite des blocs des rangées intermédiaires sont soumises à une usure plus prononcée que les arêtes d'attaque des mêmes blocs (conduisant à un mécanisme d'usure irrégulière dite en "dent de scie").

Des solutions à ce problème ont été proposées par le passé, parmi lesquelles on trouve celle qui est décrite dans le brevet US 5127455. Ce document préconise d'incliner la face d'attaque selon un angle plus grand que l'angle d'inclinaison de la face de fuite et en limitant l'angle entre la face d'attaque et la face de fuite à au moins 15 degrés et au plus 25 degrés. Dans ce qui précède l'angle d'une face est mesuré, dans un plan de coupe perpendiculaire à l'axe de rotation, par rapport à une perpendiculaire à la surface de roulement ; les faces d'attaque et de fuite sont inclinées de manière à augmenter la largeur du bloc avec la profondeur (ainsi la largeur de la rainure entre deux blocs est réduite au fur et à mesure de l'usure de la bande). La disposition préconisée par US 5127455 confère à cette bande de roulement un sens de roulage unique qui est matérialisé sur la bande de roulement elle-même ou le pneu pourvu de la bande de roulement avec un moyen visible indiquant ledit sens de roulage et assurant ainsi un montage dans le bon sens sur le véhicule permettant de bénéficier au mieux de cette inclinaison différentielle.

Par ailleurs, pour atteindre une meilleure adhérence sur chaussée mouillée, chaque bloc peut être pourvu avec au moins une incision (c'est-à-dire une découpure dont les faces en vis-à-vis sont à une distance moyenne l'une de l'autre inférieure à 1 mm. Sur chaque bloc pourvu d'une incision, il est créé deux arêtes supplémentaires utiles pour couper le film d'eau présent sur la chaussée par temps de pluie.

On a toutefois constaté que la combinaison d'au moins une incision avec les blocs tels que proposés dans US 5127455 pouvait affecter de façon sensible l'usure des blocs des rangées intermédiaires d'une bande de roulement au point qu'une partie des gains pressentis pouvait être perdu par la mise en place d'incisions dans les blocs de ces rangées
Les documents JP-A-2001063318 et US-A-5 679 186 préconisent la formation de blocs pourvus de plusieurs incisions pour augmenter l'adhérence de pneus de véhicles de tourisme.

L'objet de l'invention est de proposer une bande de roulement destinée à former la partie radialement à l'extérieur d'un pneu destiné à être monté sur un essieu moteur d'un véhicule poids lourd et qui permette d'atteindre une performance satisfaisante en adhérence tout en ayant une usure la plus régulière possible des blocs des rangées intermédiaires (c'est-à-dire une usure uniformément répartie sur la face de contact de chaque bloc des rangées intermédiaires).

Selon l'invention, il est proposé une bande de roulement pour pneu destiné à équiper un essieu moteur d'un véhicule poids lourd (camion, bus), cette bande de roulement comprenant au moins deux rainures d'orientation générale circonférentielle et une pluralité de rainures d'orientation générale transversale délimitant au moins une rangée intermédiaire de blocs et des rangées bord délimitant axialement et transversalement cette bande de roulement.

Chaque bloc des rangées intermédiaires comporte des faces latérales, une face de contact coupant les faces latérales pour former des arêtes, l'arête prévue pour rentrer la première en contact avec la chaussée en roulage correspondant à l'arête d'attaque formée par l'intersection de la face de contact avec une face latérale dite face d'attaque du bloc, l'arête sortant en dernier du contact étant dite l'arête de fuite, cette dernière étant formée par l'intersection de la face de contact et d'une face latérale dite face de fuite.

Sur les blocs des rangées intermédiaires, la face d'attaque fait, avec une perpendiculaire à la face de contact et passant par l'arête d'attaque, un angle moyen αA qui est supérieur à zéro degré, la face de fuite faisant, avec une perpendiculaire à la face de contact et passant par l'arête de fuite, un angle moyen αF qui est supérieur à zéro degré, l'angle αA de la face d'attaque étant plus grand que l'angle αF de la face de fuite, les faces d'attaque et de fuite d'un même bloc étant orientées de manière à s'écarter l'une de l'autre en allant de la surface de roulement vers l'intérieur de la bande.

Chaque bloc d'au moins une rangée intermédiaire comprend une incision s'étendant dans l'épaisseur du bloc sur au moins une profondeur égale à la profondeur des rainures transversales délimitant ledit bloc et d'une face latérale à une autre face latérale du bloc, cette incision étant délimitée par des faces en vis-à-vis pourvues de moyens de blocage des mouvements relatifs d'une desdites faces par rapport à l'autre face dans au moins une direction, cette incision coupant la face de contact du bloc, à l'état neuf, en deux parties surfaciques d'aires sensiblement égales. Par aires sensiblement égales, il faut comprendre que ces aires sont égales ou ne diffèrent au plus que de 1%.

Cette bande de roulement est caractérisée en ce que :
- l'incision est une incision unique et est inclinée d'un angle moyen β, mesuré par rapport à la perpendiculaire à la face de contact, de même sens que l'angle αA de la face d'attaque et en ce que,
- le volume de matière compris entre la face d'attaque et l'incision est inférieur au volume de matière compris entre la face de fuite et la même incision.

Grâce à cette combinaison de moyens, le passage dans le contact avec la chaussée en cours de roulage permet, de manière surprenante, d'atteindre une répartition d'efforts entre la partie avant des blocs (partie du bloc entre la face d'attaque et l'incision) et la partie arrière (partie du bloc entre l'incision et la face de fuite) favorisant une répartition homogène et régulière de l'usure sur la totalité de la face de contact tout en ayant des arêtes additionnelles bénéfiques pour l'adhérence.

Pour chaque incision d'un élément de relief (bloc ou nervure), on définit un plan moyen dont l'intersection avec la face de contact de l'élément définit une trace. Le plan moyen d'une incision est obtenu par un traitement numérique consistant, après avoir relevé la position géométrique des points sur une paroi de matière délimitant cette incision, à faire une régression linéaire dans deux directions, à savoir dans la direction de l'épaisseur de la bande de roulement et dans une direction perpendiculaire à la direction de l'épaisseur.

Préférentiellement, l'angle de l'incision α est plus grand que zéro degré et plus petit que 30 degrés. L'angle de la face d'attaque αA est inférieur à 45 degrés.

Préférentiellement, l'écart entre les volumes de matière entre la face d'attaque et l'incision et entre la face de fuite et la même incision est au moins égal à 1 % du plus grand desdits volumes. Préférentiellement, l'écart entre les volumes de matière entre la face d'attaque et l'incision et entre la face de fuite et la même incision est au plus égal à 15% du plus grand desdits volumes.

Dans une variante intéressante, la bande de roulement selon l'invention est pourvue sur une pluralité de blocs et sur au moins une des parties volumiques des blocs situées entre l'incision et le face d'attaque ou entre l'incision et la face de fuite, avec au moins une cavité longiligne aveugle (incision ou puits ou trou), c'est-à-dire ne débouchant que sur la face de contact des blocs. Avantageusement, ces cavités longilignes aveugles ont des profondeurs égales ou proches de la profondeur de l'incision inclinée et sont elles mêmes inclinées d'un angle moyen différent de zéro degré par rapport à une perpendiculaire à la surface de roulement, cet angle étant de même sens que l'angle de la face attaque des blocs, et au plus égal à l'angle que fait ladite face attaque.

L'invention concerne également un pneu directionnel, c'est-à-dire qui doit être monté sur un véhicule poids lourd d'une façon précise pour tourner dans un sens donné lors de la marche avant du véhicule. Ce pneu est pourvu d'une bande de roulement telle que décrite et comprend en outre un moyen (signe ou marquage) apparent indiquant le sens de rotation préférentiel de ce pneu. Ce signe ou marquage peut prendre la forme d'au moins une flèche moulée sur la partie flanc du pneu ou sur la partie latérale de la bande de roulement elle-même.

D'autres caractéristiques et avantages de l'invention ressortent de la description faite ci-après en référence aux dessins annexés qui montrent, à titre d'exemples non limitatifs, des formes de réalisation de l'objet de l'invention.
La figure 1 montre une vue de la surface de roulement d'une partie d'une bande de roulement selon l'invention ;
La figure 2 montre une vue en coupe d'une partie d'une rangée de blocs de la bande de roulement telle que montrée à la figure 1
La figure 3 montre une autre variante de bande de roulement selon l'invention ;
La figure 4 montre une vue partielle de la variante montrée à la figure 3 ;
La figure 5 montre une variante de bande de roulement pourvue en outre de cavités longilignes aveugles ;
La figure 6 montre une coupe de la bande de roulement montrée à la figure 5.

Dans toutes les figures de la présente demande, les mêmes signes de référence sont employés afin de désigner des éléments de structure identiques dans les différentes variantes représentées.

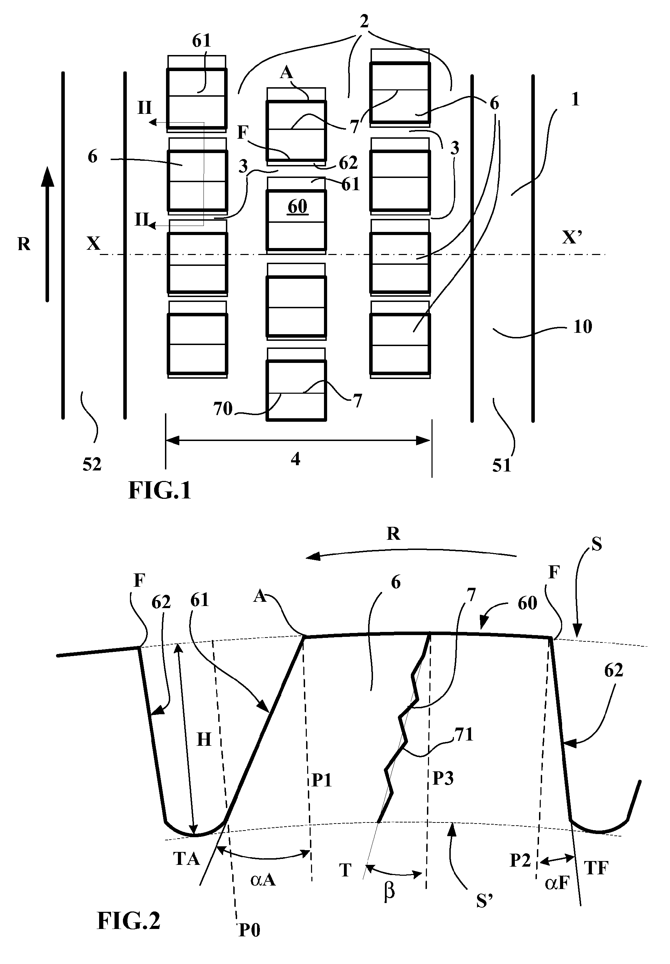

La figure 1 montre une vue de la surface de roulement d'une bande de roulement 1 selon l'invention. On indique sur cette figure 1 le sens de rotation du pneu pourvu d'une telle bande qu'il est nécessaire de respecter afin d'atteindre les résultats escomptés ; ce sens de rotation est indiqué sur la figure par une flèche R. Cette bande de roulement est pourvue de quatre rainures 2 rectilignes orientées circonférentiellement et partageant cette bande en deux parties de bord 51 situées axialement à l'extérieur de la bande et une partie intermédiaire 4. La partie intermédiaire 4 comprend trois rangées de blocs 6 délimités par à la fois les rainures circonférentielles et des rainures transversales 3 parallèles à la direction axiale (c'est-à-dire la direction de l'axe de rotation repérée par XX' sur la figure).

Les parties de bord 51 et 52 sont des nervures circonférentielles dépourvues d'incisions.

Chaque bloc 6 comprend des faces latérales et une face de contact 60, cette dernière étant sensiblement parallèle au plan de la figure 1. L'ensemble des faces de contact des éléments de relief de la bande forme la surface de roulement 10 de la bande de roulement 1 destinée à venir en contact avec la chaussée pendant le roulage.

La face de contact 60 de chaque bloc 6 est délimitée par quatre arêtes. Ces arêtes sont les intersections de la face de contact 60 avec chacune des faces latérales. L'arête d'un bloc rentrant la première dans le contact pendant le roulage (selon le sens de rotation donné par la flèche R) est dite arête d'attaque A tandis que l'arête du même bloc quittant la dernière le contact est dite arête de fuite F.

La face latérale coupant la face de contact 60 selon l'arête d'attaque A correspond à la face d'attaque 61 dont l'intersection avec un plan perpendiculaire à l'axe de rotation est montrée à la figure 2. La face latérale coupant la face de contact 60 selon l'arête de fuite F correspond à la face de fuite 62 dont l'intersection avec un plan perpendiculaire à l'axe de rotation est montrée à la figure 2.

Sur la figure 2, montrant une vue en coupe dans un plan perpendiculaire à l'axe transversal XX' d'un bloc d'une rangée intermédiaire de la bande de roulement montrée à la figure 1 (suivant la ligne II-II sur la figure 1), on distingue les intersections des faces d'attaque 61 et de fuite 62 délimitant des rainures d'orientation sensiblement parallèle à l'axe XX'. L'intersection de la face de contact 60 du bloc 6 se termine par l'intersection de l'arête d'attaque A et l'intersection de l'arête de fuite F : le sens de rotation (montré par la flèche R) est donné par la direction allant de l'arête de fuite vers l'arête d'attaque.

La face d'attaque 61 coupe le plan de la figure 2 selon une droite TA ; cette droite TA fait un angle αA avec une perpendiculaire P1 à la face de contact 60 passant par le point d'intersection de l'arête d'attaque A avec le plan de coupe de la figure 2. La face de fuite 62 coupe le plan de la figure 2 selon une droite TF ; cette droite TF fait un angle αF avec une perpendiculaire P2 à la face de contact 60 passant par le point d'intersection de l'arête de fuite F avec le plan de coupe de la figure 2. Les angles αA et αF sont tels que la largeur moyenne d'une rainure transversale décroît avec la profondeur (les faces d'attaque et de fuite ont tendance à converger vers une perpendiculaire P0 passant par le milieu de la rainure sur la surface de roulement (la face d'attaque convergeant plus rapidement que la face de fuite).

L'angle αA est dans le cas présent égal à 12 degrés.

L'angle αF vaut dans le cas présent 5 degrés.

Les rainures transversales ont une profondeur moyenne H.

Chaque bloc des rangées de blocs de la partie intermédiaire 4 de la bande de roulement est pourvu d'une incision unique 7 coupant la face de contact 60 selon une trace moyenne 70 visible sur la figure 1 ; cette trace moyenne 70 est, dans le cas présent, rectiligne sur la bande à l'état neuf et est parallèle à l'axe XX'. Cette trace moyenne 70 coupe la face de contact de manière à diviser cette face en deux parties d'aires égales.

Par ailleurs, l'incision 7 est inclinée dans la profondeur du bloc d'un angle moyen β, mesuré par rapport à la perpendiculaire à la surface de roulement, de même sens que l'angle αA de la face d'attaque. Par de même sens, on entend ici que les points de l'incision 7 les plus à l'intérieur de la bande de roulement ont tendance à s'éloigner des points de la face de fuite.

L'inclinaison de l'incision 7 (dans le présent exemple égale à 10 degrés) et celle de la face d'attaque (dans le présent exemple égale à 12 degrés) sont déterminées de manière à délimiter entre elle un volume de matière VA qui est inférieur au volume VF que cette même incision délimite avec la face de fuite du même bloc. L'écart (VF-VA) entre ces deux volumes est ici égal à 6.5% du volume le plus grand.

Dans le cas présent, ces volumes VF, VA sont mesurés entre la face de contact (limitée par la surface courbe S tangente à la face de contact 60 du bloc et une surface courbe S' sensiblement parallèle à la surface S et passant par le fond de l'incision 7.

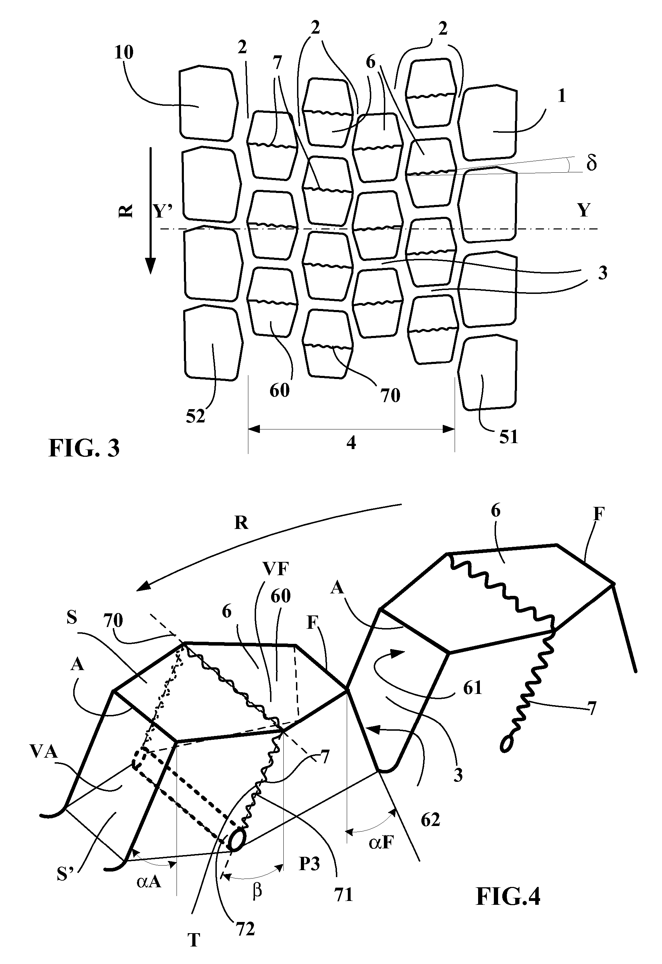

Dans la variante de réalisation d'une bande de roulement selon l'invention montrée avec les figures 3 et 4, la bande comprend une partie intermédiaire formée de quatre rangées de blocs de forme non rectangulaire (six arêtes d'orientation différentes délimitent la face de contact de chaque bloc). Ces blocs sont délimités par des rainures circonférentielles non rectilignes (ici en zigzag) et des rainures transversales obliques c'est-à-dire faisant un angle δ différent de zéro degré avec la direction transversale (égal dans le cas présent à 11 degrés). Dans d'autres variantes non montrées ici, cet angle δ peut être choisi différent des angles des arêtes d'attaque et de fuite.

La figure 3 montre une vue de la surface de roulement d'une bande de roulement 1 ayant une direction de roulage imposée et pouvant être indiquée sur la bande de roulement par un moyen visible (cette direction est indiquée sur la figure 3 par une flèche R).

Cette bande de roulement est pourvue de cinq rainures 2 rectilignes orientées circonférentiellement et partageant cette bande en deux parties de bord 51, 52 situées axialement à l'extérieur de la bande et une partie intermédiaire 4. La partie intermédiaire 4 comprend quatre rangées de blocs 6 délimités par à la fois les rainures circonférentielles et des rainures transversales 3 faisant un angle δ avec la direction axiale (représentée par la direction YY'), cet angle δ étant ici égal à 11 degrés. La configuration générale du dessin de la bande de roulement est ici orientée, c'est-à-dire que l'angle δ des rainures transversales d'une moitié de la partie intermédiaire 4 est opposée en signe à l'angle δ des rainures transversales de l'autre moitié de la même partie intermédiaire 4.

Chaque bloc 6 comprend des faces latérales et une face de contact 60, cette dernière étant seule visible sur cette figure 1. L'ensemble des faces de contact des éléments de relief de la bande forme la surface de roulement 10 de la bande de roulement 1 destinée à venir en contact avec la chaussée pendant le roulage.

La face de contact 60 de chaque bloc 6 de toutes les rangées de la bande de roulement à l'exception des rangées des parties de bord est divisée en deux parties d'aires égales par une incision débouchant sur cette face. La trace moyenne 70 de l'incision sur la face de contact suit un profil moyen qui est sensiblement parallèle aux arêtes d'attaque et de fuite ; cette trace 70 fait donc un angle de 11 degrés égal à l'angle δ avec la direction axiale YY'.

Préférentiellement, la direction de la trace de l'incision sur la face de contact d'un bloc est parallèle à la bissectrice de l'angle formé par les directions moyennes des rainures transversales délimitant ce bloc.

Sur la figure 4, montrant une vue partielle de deux blocs 6 d'une rangée de la partie intermédiaire, on voit que les faces d'attaque 61 et de fuite 62 sont inclinées respectivement d'un angle αA égal à 10 degrés et d'un angle αF égal à 2 degrés par rapport à des plans perpendiculaires à la face de contact passant par les arêtes d'attaque et de fuite respectivement. Les angles αA et αF sont tels que les faces délimitant une même rainure transversale 3 convergent toutes les deux vers une position centrale en allant dans la profondeur de la bande de roulement.

Chaque bloc 6 des rangées de la partie intermédiaire 4 est pourvu d'une incision unique 7 qui est inclinée dans la profondeur d'un angle moyen β par rapport à un plan perpendiculaire à la face de contact passant par la trace moyenne 70 de l'incision sur la face de contact 60 ; cette incision 7 est orientée de manière à ce que les points de l'incision les plus à l'intérieur de la bande de roulement aient tendance à s'éloigner de plus en plus des points de la face de fuite de manière à délimiter avec la face d'attaque 61 un volume de bloc qui est inférieur au volume que cette même incision 7 délimite avec la face de fuite 62.

L'incision 7 est globalement plane et coupe les faces latérales de chaque bloc selon une trace T (la trace de l'incision correspond à l'intersection du plan moyen de l'incision avec la face de contact du bloc) faisant un angle moyen β avec plan P3 perpendiculaire à la face de contact et suivant l'intersection de l'incision avec la face de contact. Cet angle vaut dans le cas présent 6 degrés. Cette même incision est délimitée par des parois de matière en vis-à-vis distantes d'environ 0.4 mm.

Les parois délimitant l'incision 7 sont pourvues de moyens de blocage 71 interagissant entre eux pour réduire voire annuler tout déplacement relatif d'une paroi par rapport à l'autre lors du passage dans le contact avec la chaussée en roulage ; par déplacement relatif, on entend ici que les moyens de blocage sont efficaces pour réaliser un blocage d'un déplacement quelconque d'une paroi par rapport à l'autre dans deux directions différentes, à savoir dans la direction de l'épaisseur de la bande et dans une direction perpendiculaire à la direction selon l'épaisseur, cette direction perpendiculaire étant contenu dans le plan moyen de l'incision.

L'incision centrée sur la face de contact d'un bloc est telle qu'en combinaison avec l'inclinaison de la face d'attaque elle délimite un volume VA qui est inférieur au volume VF délimité par la même incision et la face de fuite. Dans le cas présent, ces volumes sont mesurés entre la face de contact (limitée par la surface courbe S) et une surface courbe S' parallèle à la surface S et passant par le fond de l'incision.

Dans cette variante, l'incision 7 est en outre prolongée sur toute sa longueur par une partie 72 qui est de largeur supérieure à la largeur moyenne de l'incision. Dans le cas présent, cette partie élargie 72 débouche à ses extrémités sur les faces latérales du bloc 6 et est de section sensiblement oblongue de largeur moyenne égale à 4 mm et de longueur moyenne égale à 8 mm (cette partie n'intervient pas dans l'évaluation des volumes VA et VF). Le volume VA est ici égal à 98% du volume VF.

Comme représentée avec cette variante, les blocs des parties de bord 51, 52 de la bande de roulement sont totalement dépourvues d'incisions.

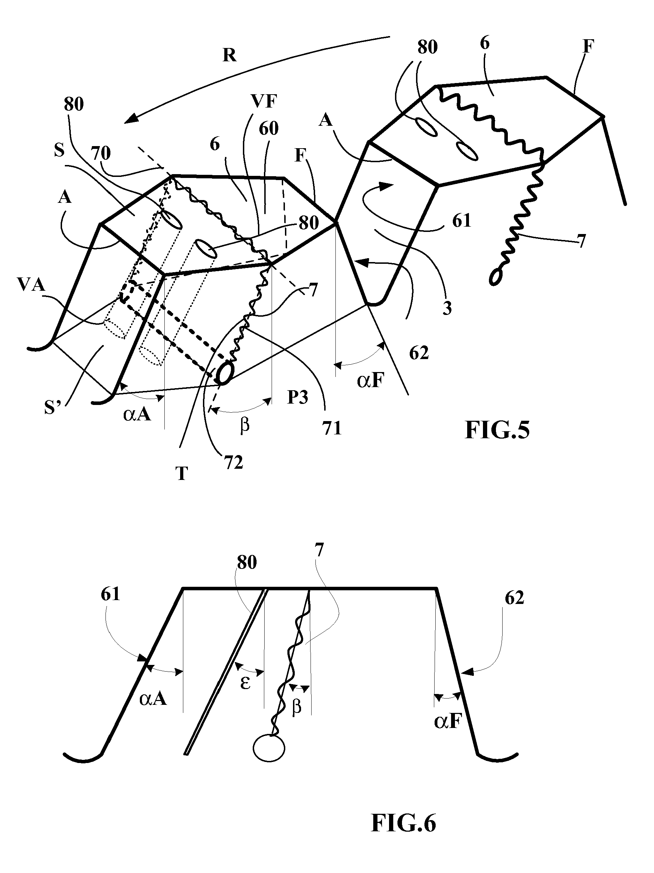

Dans une autre variante représentée avec la vue de perspective (figure 5) et la vue en coupe selon un plan perpendiculaire à l'axe de rotation du pneu sur lequel la bande de roulement est prévue pour être placée (figure 6), on ajoute à la bande de roulement montrée à la figure 3 et sur l'ensemble des blocs comprenant une incision inclinée 7 selon l'invention, deux cavités longilignes aveugles 80 de section transversale elliptique.

Ces cavités longilignes aveugles 80 sont localisées sur la partie des blocs situées entre l'incision 7 et la face d'attaque 61, deux cavités longilignes aveugles 80 de section transversale elliptique. Ces cavités longilignes aveugles 80 ne débouchent que sur la face de contact des blocs et non sur les faces latérales des blocs et ont des profondeurs égales ou proches de la profondeur de l'incision inclinée 7 et sont elles mêmes inclinées d'un angle moyen δ différent de zéro degré par rapport à une perpendiculaire à la surface de roulement, cet angle δ étant de même sens que l'angle αA de la face attaque des blocs, et dans le cas présent égal à l'angle αA que fait ladite face attaque. Ces cavités additionnelles génèrent des arêtes supplémentaires sur la face de contact sans pour autant affecter de façon sensible les rigidités de compression et de cisaillement des blocs. Par ailleurs leur inclinaison choisie pour être de même sens que celle de la face d'attaque et de celle de l'incision est favorable également en usure.

L'invention n'est bien sûr pas limitée aux exemples décrits et représentés et diverses modifications peuvent y être apportées sans sortir de son cadre.

## Revendications

1. Bande de roulement (1) pour pneumatique de poids lourd comportant au moins deux rainures (2) d'orientation générale circonférentielle et une pluralité de rainures (3) d'orientation générale transversale délimitant au moins une rangée intermédiaire (4) de blocs (6) et des rangées bord (51) délimitant transversalement la bande,
chaque bloc (6) des rangées intermédiaires (4) comportant des faces latérales, une face de contact (60) coupant les faces latérales pour former des arêtes, l'arête rentrant la première en contact avec la chaussée en roulage correspondant à l'arête d'attaque formée par l'intersection de la face de contact (60) avec une face latérale dite face d'attaque (61) du bloc, l'arête sortant en dernier du contact étant dite l'arête de fuite formée par l'intersection de la face de contact (60) et d'une face latérale dite face de fuite (62),
sur les blocs des rangées intermédiaires (4), la face d'attaque (61) faisant, avec une perpendiculaire à la face de contact (60) et passant par l'arête d'attaque, un angle moyen αA qui est supérieur à zéro degré, la face de fuite (62) faisant, avec une perpendiculaire à la face de contact (60) et passant par l'arête de fuite, un angle moyen αF qui est supérieur à zéro degré, l'angle αA de la face d'attaque (61) étant plus grand que l'angle αF de la face de fuite, les faces d'attaque et de fuite d'un même bloc étant orientées de manière à s'écarter l'une de l'autre en allant de la surface de roulement vers l'intérieur de la bande,
chaque bloc (6) d'au moins une rangée intermédiaire (4) comprend une incision (7) s'étendant dans l'épaisseur du bloc sur au moins une profondeur égale à la profondeur (H) des rainures transversales (3) délimitant ledit bloc, cette incision (7) étant délimitée par des faces en vis-à-vis pourvues de moyens de blocage (71) des mouvements relatifs d'une desdites faces par rapport à l'autre face dans au moins une direction, cette incision (7) coupant la face de contact (60) du bloc en deux parties d'aires sensiblement égales,
cette bande de roulement étant **caractérisée en ce que** :
- l'incision (7) est une incision unique (7) et est inclinée d'un angle moyen β, mesuré par rapport à la perpendiculaire à la face de contact (60), de même sens que l'angle αA de la face d'attaque ;
- le volume de matière compris entre la face d'attaque (61) et l'incision (7) est inférieur au volume de matière compris entre la face de fuite (62) et la même incision (7).

2. Bande de roulement pour pneumatique selon la revendication 1 **caractérisée en ce que** l'écart entre le volume de matière compris entre la face d'attaque et l'incision et le volume de matière compris entre la face de fuite et la même incision est au moins égal à 1% du volume le plus grand.

3. Bande de roulement pour pneumatique selon la revendication 1 ou la revendication 2 **caractérisée en ce que** l'écart entre le volume de matière compris entre la face d'attaque et l'incision et le volume de matière compris entre la face de fuite et la même incision est au plus égal à 15% du volume le plus grand.

4. Bande de roulement pour pneumatique selon l'une des revendications 1 à 3 **caractérisée en ce que** les incisions sont pourvues de moyens de blocage (71) dans la direction transversale et dans la direction de l'épaisseur de la bande de roulement.

5. Bande de roulement pour pneumatique selon l'une quelconque des revendications 1 à 4 **caractérisée en ce que** l'incision (7) est prolongée sur toute sa longueur par une partie (72) qui est de largeur supérieure à la largeur moyenne de l'incision, cette partie élargie (72) débouchant à ses extrémités sur des faces latérales du bloc.

6. Bande de roulement pour pneumatique selon l'une quelconque des revendications 1 à 5 **caractérisée en ce que** la direction de la trace de l'incision sur la face de contact d'un bloc est parallèle à la bissectrice de l'angle formé par les directions des rainures transversales délimitant ledit bloc.

7. Bande de roulement pour pneumatique selon l'une quelconque des revendications 1 à 6 **caractérisée en ce que** les éléments de sculpture des bords de la bande de roulement sont dépourvus d'incisions.

8. Bande de roulement pour pneumatique selon l'une quelconque des revendications 1 à 7 **caractérisée en ce que**, sur une pluralité de blocs, au moins une partie située entre l'incision et le bord d'attaque ou entre l'incision et le bord de fuite de chacun desdits blocs, est pourvue avec au moins une cavité longiligne aveugle (80), chaque cavité longiligne aveugle est inclinée d'un angle moyen δ différent de zéro degré par rapport à une perpendiculaire à la surface de roulement, cet angle δ étant de même sens que l'angle αA de la face attaque desdits blocs, et au plus égal à l'angle αA de ladite face attaque.

9. Pneu pourvu d'une bande de roulement définie selon l'une quelconque des revendications 1 à 8 **caractérisée en ce que** ce pneu comprend un moyen apparent pour indiquer le sens de rotation (R) préférentiel.

## Patentansprüche

1. Lauffläche (1) für Schwerlastkraftwagen-Luftreifen, die wenigstens zwei Rillen (2) mit allgemeiner Orientierung in Umfangsrichtung und mehrere Rillen (3) mit allgemeiner transversaler Orientierung, die wenigstens eine Zwischenreihe (4) von Stollen (6) begrenzen, und Randbereiche (51), die die Fläche transversal begrenzen, aufweist,
wobei jeder Stollen (6) der Zwischenreihen (4) Seitenflächen aufweist, wobei eine Kontaktfläche (60) die Seitenflächen schneidet, um Kanten zu bilden, wobei die Kante, die beim Abrollen als erstes mit der Fahrbahn in Kontakt gelangt, der Angriffskante entspricht, die durch den Schnitt der Kontaktfläche (60) mit einer Seitenfläche, die Angriffsfläche (61) des Stollens genannt wird, gebildet ist, und wobei die Kante, die als letztes den Kontakt verlässt, die Entweichkante genannt wird, die durch den Schnitt der Kontaktfläche (60) und einer Seitenfläche, die Entweichfläche (62) genannt wird, gebildet ist,
wobei an den Stollen der Zwischenreihen (4) die Angriffsfläche (61) mit einer Normalen der Kontaktfläche (60), die durch die Angriffskante verläuft, einen mittleren Winkel αA bildet, der größer als null Grad ist, die Entweichfläche (62) mit einer Normalen der Kontaktfläche (60), die durch die Entweichkante verläuft, einen mittleren Winkel αF bildet, der größer als null Grad ist, wobei der Winkel αA der Angriffsfläche (61) größer ist als der Winkel αF der Entweichfläche und wobei die Angriffs- und Entweichflächen desselben Stollens in der Weise orientiert sind, dass sie sich ausgehend von der Laufoberfläche in das Innere der Fläche voneinander entfernen,
wobei jeder Stollen (6) wenigstens einer Zwischenreihe (4) einen Einschnitt (7) umfasst, der sich in Dickenrichtung des Stollens wenigstens bis zu einer Tiefe erstreckt, die gleich der Tiefe (H) der transversalen Rillen (3), die den Stollen begrenzen, ist, wobei dieser Einschnitt (7) durch gegenüberliegende Flächen begrenzt ist, die mit Mitteln (71) zum Blockieren relativer Bewegungen einer der Flächen in Bezug auf die andere Fläche in wenigstens einer Richtung versehen sind, wobei dieser Einschnitt (7) die Kontaktfläche (60) des Stollens in zwei Teile mit im Wesentlichen gleichen Flächeninhalten zerschneidet,
wobei diese Lauffläche **dadurch gekennzeichnet ist, dass**:
- der Einschnitt (7) ein einziger Einschnitt (7) ist und um einen mittleren Winkel β geneigt ist, der in Bezug auf die Normale der Kontaktfläche (60) im gleichen Richtungssinn wie der Winkel αA der Angriffsfläche gemessen wird;
- das Materialvolumen, das zwischen der Angriffsfläche (61) und dem Einschnitt (7) enthalten ist, kleiner ist als das Materialvolumen, das zwischen der Entweichfläche (62) und demselben Einschnitt (7) enthalten ist.

2. Lauffläche für Luftreifen nach Anspruch 1, **dadurch gekennzeichnet, dass** der Abstand zwischen dem Materialvolumen, das zwischen der Angriffsfläche und dem Einschnitt vorhanden ist, und dem Materialvolumen, das zwischen der Entweichfläche und demselben Einschnitt vorhanden ist, wenigstens gleich 1 % des größten Volumens ist.

3. Lauffläche für Luftreifen nach Anspruch 1 oder Anspruch 2, **dadurch gekennzeichnet, dass** der Abstand zwischen dem Materialvolumen, das zwischen der Angriffsfläche und dem Einschnitt vorhanden ist, und dem Materialvolumen, das zwischen der Entweichfläche und demselben Einschnitt vorhanden ist, höchstens gleich 15 % des größten Volumens ist.

4. Lauffläche für Luftreifen nach einem der Ansprüche 1 bis 3, **dadurch gekennzeichnet, dass** die Einschnitte mit Mitteln (71) zum Blockieren in der transversalen Richtung und in Richtung der Dicke der Lauffläche versehen sind.

5. Lauffläche für Luftreifen nach einem der Ansprüche 1 bis 4, **dadurch gekennzeichnet, dass** der Einschnitt (7) auf seiner gesamten Länge durch einen Teil (72) verlängert ist, der eine Breite besitzt, die größer ist als die mittlere Breite des Einschnitts, wobei dieser erweiterte Teil (72) an seinen Enden in die seitlichen Flächen des Stollens mündet.

6. Lauffläche für Luftreifen nach einem der Ansprüche 1 bis 5, **dadurch gekennzeichnet, dass** die Richtung der Spur des Einschnitts auf der Kontaktfläche eines Stollens zu der Winkelhalbierenden des Winkels, der durch die Richtungen der transversalen Rillen, die den Stollen begrenzen, gebildet wird, parallel ist.

7. Lauffläche für Luftreifen nach einem der Ansprüche 1 bis 6, **dadurch gekennzeichnet, dass** die Skulpturelemente der Ränder der Lauffläche keine Einschnitte aufweisen.

8. Lauffläche für Luftreifen nach einem der Ansprüche 1 bis 7, **dadurch gekennzeichnet, dass** bei mehreren Stollen wenigstens ein Teil, der sich zwischen dem Einschnitt und dem Angriffsrand oder zwischen dem Einschnitt und dem Entweichrand jedes der Stollen befindet, mit wenigstens einem länglichen Blindhohlraum (80) versehen ist, wobei jeder längliche Blindhohlraum um einen mittleren Winkel δ, der von null Grad verschieden ist, in Bezug auf eine Normale der Lauffläche geneigt ist, wobei dieser Winkel δ den gleichen Richtungssinn wie der Winkel αA der Angriffsfläche der Stollen hat und wenigstens gleich dem Winkel αA der Angriffsfläche ist.

9. Reifen, der mit einer Lauffläche nach einem der Ansprüche 1 bis 8 versehen ist, **dadurch gekennzeichnet, dass** dieser Reifen ein Mittel umfasst, das sichtbar ist, um die bevorzugte Drehrichtung (R) anzugeben.

## Claims

1. Tread (1) for truck tyre comprising at least two grooves (2) of circumferential overall orientation and a plurality of grooves (3) of transverse overall orientation delimiting at least one intermediate row (4) of blocks (6) and edge rows (51) transversely delimiting the tread,
each block (6) of the intermediate rows (4) comprising lateral faces, a contact face (60) intersecting the lateral faces to form edge corners, the edge corner that is first to come into contact with the road surface during running corresponding to the leading edge corner formed by the intersection of the contact face (60) with a lateral face known as the leading face (61) of the block, the edge corner last to leave contact being known as the trailing edge corner formed by the intersection of the contact face (60) and of a lateral face known as the trailing face (62),
on the blocks of the intermediate rows (4), the leading face (61) making, with a perpendicular to the contact face (60) and passing through the leading edge corner, a mean angle αA which is greater than zero degrees, the trailing face (62) making, with a perpendicular to the contact face (60) and passing through the trailing edge corner, a mean angle αF which is greater than zero degrees, the angle αA of the leading face (61) being greater than the angle αF of the trailing face, the leading and trailing faces of one and the same block being oriented in such a way as to diverge from one another from the running surface toward the interior of the tread,
each block (6) of at least one intermediate row (4) comprises an incision (7) extending into the thickness of the block over at least a depth equal to the depth (H) of the transverse grooves (3) that delimit the said block, this incision (7) being delimited by opposing faces provided with blocking means (71) for blocking the relative movements of one of the said faces with respect to the other face in at least one direction, this incision (7) dividing the contact face (60) of the block into two parts with substantially equal surface areas,
this tread being **characterized in that**:
- the incision (7) is a single incision and is inclined by a mean angle β, measured with respect to the perpendicular to the contact face (60) in the same direction as the angle αA of the leading face;
- the volume of material contained between the leading face (61) and the incision (7) is less than the volume of material contained between the trailing face (62) and the same incision (7).

2. Tyre tread according to Claim 1, **characterized in that** the difference between the volume of material contained between the leading face and the incision and the volume of material contained between the trailing face and the same incision is at least equal to 1% of the larger volume.

3. Tyre tread according to Claim 1 or Claim 2, **characterized in that** the difference between the volume of material contained between the leading face and the incision and the volume of material contained between the trailing face and same incision is at most equal to 15% of the larger volume.

4. Tyre tread according to one of Claims 1 to 3, **characterized in that** the incisions are provided with blocking means (71) for blocking in the transverse direction and in the direction of the thickness of the tread.

5. Tyre tread according to any one of Claims 1 to 4, **characterized in that** the incision (7) is extended over its entire length by a part (72) which is of a width greater than the mean width of the incision, this widened part (72) opening at its ends onto lateral faces of the block.

6. Tyre tread according to any one of Claims 1 to 5, **characterized in that** the direction of the line of the incision on the contact face of a block is parallel to the bisector of the angle formed by the directions of the transverse grooves that delimit the said block.

7. Tyre tread according to any one of Claims 1 to 6, **characterized in that** the tread pattern elements at the edges of the tread have no incisions.

8. Tyre tread according to any one of Claims 1 to 7, **characterized in that**, over a plurality of blocks, at least a part situated between the incision and the leading edge or between the incision and the trailing edge of each of the said blocks is provided with at least one blind longilinear cavity (80), each blind longilinear cavity being inclined by a mean angle ε other than zero degrees with respect to a perpendicular to the tread surface, this angle ε being in the same direction as the angle αA of the leading face of the said blocks and at most equal to the angle αA of the said leading face.

9. Tyre provided with a tread defined according to any one of Claims 1 to 8, **characterized in that** this tyre comprises a visible means for indicating the preferred direction of rotation (R).
